# EUROPEAN PATENT APPLICATION

(11) **EP 4 477 579 A1**
(43) Date of publication of application: **18.12.2024**
(21) Application number: 23752601.7
(22) Date of filing: 13.01.2023
(51) Int. Cl.: B65D 90/22

(54) **HANDLING DEVICE FOR EASILY POLYMERIZABLE SUBSTANCE**

(30) Priority: 08.02.2022 JP 2022017646
(71) Applicant: Nippon Shokubai Co., Ltd., Osaka-shi, Osaka 541-0043 (JP)
(72) Inventor: KOBAYASHI, Shunsuke, Himeji-shi, Hyogo 671-1282 (JP); HAKO, Tomoya, Himeji-shi, Hyogo 671-1282 (JP)
(74) Representative: Schön, Christoph
(86) International application number: PCT/JP2023/000744
(87) International publication number: WO 2023/153132

(57) **Abstract**

[Problem] A handling device for an easily polymerizable substance, capable of inhibiting polymer generation in ancillary equipment is provided.

[Solution] A handling device 10 for an easily polymerizable substance includes: ancillary equipment 30 installed at a body part 20 in which an easily polymerizable substance is handled, the ancillary equipment 30 including no temperature control mechanism 40 that gas of the easily polymerizable substance can contact; and a temperature control mechanism 40 configured to control the temperature of the ancillary equipment 30 to a temperature lower than the boiling point of the easily polymerizable substance and to a temperature higher than the melting point of the easily polymerizable substance.

## Description

### TECHNICAL FIELD

The present invention relates to a handling device for an easily polymerizable substance.

### BACKGROUND ART

A device that handles an easily polymerizable substance such as (meth)acrylic acid or (meth)acrylic acid ester is provided with ancillary equipment such as a breather valve in some cases. The ancillary equipment controls the internal pressure of the handling device so that deformation and the like of the handling device can be inhibited.

The easily polymerizable substance is, however, extremely prone to polymerization and it is well known that polymerization often occurs in a manufacturing process. In particular, when the easily polymerizable substance is vaporized from liquid containing the easily polymerizable substance contained in a device and vapor containing the vaporized easily polymerizable substance is accumulated in a condensed state at the ancillary equipment, the easily polymerizable substance is likely to form polymer as a core. In a case where the polymer adheres to the ancillary equipment, work to remove the polymer is needed to prevent disturbance of an internal pressure control function of the ancillary equipment.

For this, for example, Patent Literature 1 discloses that a heating device is equipped at a pipe between a storage tank that stores liquid containing the easily polymerizable substance and a breather valve or the like. The heating device heats the pipe to inhibit condensation of the easily polymerizable substance in the pipe, thereby inhibiting polymerization of the easily polymerizable substance.

### CITATION LIST

### Patent Literature

Patent Literature 1
Japanese Patent Laid-open No. 2002-46794

### SUMMARY OF INVENTION

### Technical Problem

However, when a region of the device is insufficiently heated, the easily polymerizable substance potentially condenses at the insufficiently heated region. Then, when the easily polymerizable substance condensed at the insufficiently heated region contacts a heated region in the device, the condensed easily polymerizable substance is potentially easily polymerized.

The inventors studied conventional technologies related to inhibition of polymerization of the easily polymerizable substance and diligently discussed whether polymerization of the easily polymerizable substance can be more excellently inhibited by another method. Then, the inventors conceived that polymerization of the easily polymerizable substance in the ancillary equipment can be inhibited by allowing condensation of the easily polymerizable substance in the ancillary equipment to maintain the ancillary equipment at low temperature. However, when the ancillary equipment is maintained at low temperature, the easily polymerizable substance potentially solidifies and causes blockage. Thus, the present invention was completed with focus on the necessity of maintaining the temperature of the ancillary equipment at or higher than the melting point of the easily polymerizable substance.

Thus, the present invention is intended to provide a handling device for an easily polymerizable substance, capable of inhibiting polymer generation in ancillary equipment.

### Solution to Problem

A handling device for an easily polymerizable substance, according to one form of the present invention, includes: ancillary equipment installed at a body part in which an easily polymerizable substance is handled, the ancillary equipment including no temperature control mechanism that gas of the easily polymerizable substance can contact; and a temperature control mechanism configured to control the temperature of the ancillary equipment to a temperature lower than the boiling point of the easily polymerizable substance and to a temperature higher than the melting point of the easily polymerizable substance.

### Advantageous Effect of the Invention

With a handling device for an easily polymerizable substance according to the present invention, an easily polymerizable substance in ancillary equipment condenses but is maintained at low temperature by a temperature control mechanism so that polymerization reaction is inhibited. Thus, polymer generation in the ancillary equipment can be inhibited.

### BRIEF DESCRIPTION OF DRAWING

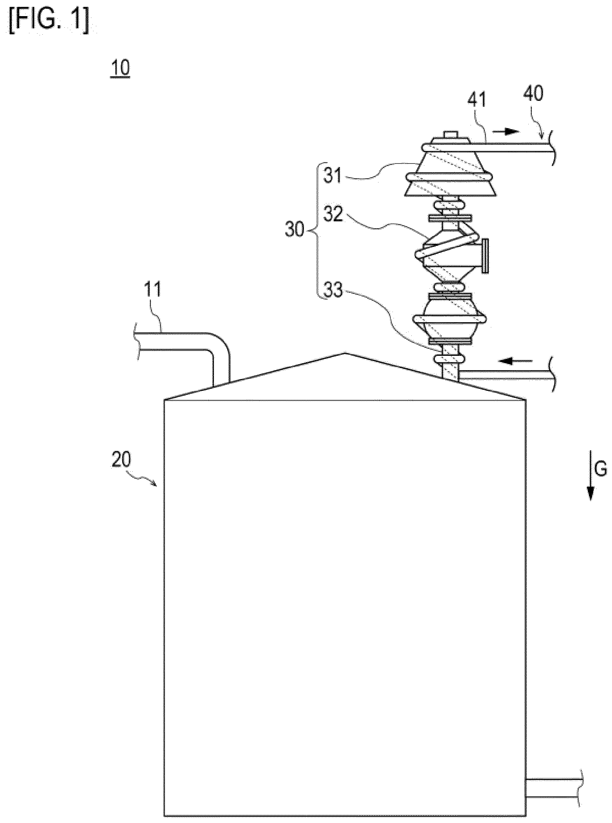

Fig. 1 is a schematic view illustrating a body part and ancillary equipment included in a handling device for an easily polymerizable substance according to an embodiment of the present invention.

### DESCRIPTION OF EMBODIMENT

An embodiment of the present invention will be described below with reference to the accompanying drawing. The following description does not limit the technical scope and the meaning of terms written in the claims. Any dimensional ratio in the drawing is exaggerated for the sake of convenience of description and different from the actual ratio in some cases.

Fig. 1 is a schematic view illustrating a body part 20 and ancillary equipment 30 included in a handling device 10 for an easily polymerizable substance (hereinafter referred to as "handling device") according to the present embodiment.

The easily polymerizable substance in the present specification is not particularly limited but may be any material that is easily polymerized, and is, for example, a polymerizable vinyl compound. The polymerizable vinyl compound is, for example, (meth)acrolein; (meth)acrylic acid; (meth)acrylate such as hydroxyethyl (meth)acrylate, hydroxypropyl (meth)acrylate, glycidyl (meth)acrylate, methyl (meth)acrylate, ethyl (meth)acrylate, butyl (meth)acrylate, or 2-ethylhexyl (meth)acrylate; or a composite thereof.

### <Handling device>

The handling device 10 includes the body part 20 that is at least one of equipment (such as a tank) for (temporary) storage, equipment (such as a distillation column, an absorption column, an extraction column, a crystallizer, or a filter) for separation, equipment (such as a heat exchanger) for heat exchange, and equipment (such as a reactor except for a gas phase reactor) for reaction of liquid containing the easily polymerizable substance in, for example, processes of manufacturing and refining the easily polymerizable substance, and preferably includes the equipment for storage.

The following describes a specific configuration of the handling device 10 with an example in which the handling device 10 is a storage device that temporarily stores liquid containing the easily polymerizable substance at manufacturing or refinement. As illustrated in Fig. 1, the handling device 10 includes the body part 20 that stores liquid containing the easily polymerizable substance, the ancillary equipment 30 attached to the body part 20, and a temperature control mechanism 40 configured to control the temperature of the ancillary equipment 30 to promote condensation of the easily polymerizable substance. Each component will be described below in detail.

### <Body part>

The body part 20 is not particularly limited as long as the body part 20 can store liquid containing the easily polymerizable substance, but may be, for example, a storage tank provided with gas seal. The body part 20 may be a pressurized tank or an ordinary pressure tank.

A pipe 11 through which liquid containing the easily polymerizable substance is supplied into the body part 20 from another device such as a reactor, a distillation column, or an evaporator may be attached to the body part 20.

Liquid containing the easily polymerizable substance and supplied to the body part 20 may contain a polymerization inhibitor in advance or may be separately supplied with the polymerization inhibitor from, for example, a pipe attached to the body part 20.

The polymerization inhibitor is not particularly limited but is, for example, hydroquinone, hydroquinone monomethyl ether, phenothiazine, or copper dibutyldithiocarbamate. The contained amount range of the polymerization inhibitor is equal to or larger than 1 ppm, preferably equal to or larger than 10 ppm. The contained amount range is also equal to or smaller than 1000 ppm, preferably equal to or smaller than 500 ppm.

The body part 20 may include an agitator (not illustrated).

### <Ancillary equipment>

The ancillary equipment 30 is configured to control the internal pressure of the body part 20.

The ancillary equipment 30 is preferably installed in a gas phase region of the body part 20, which is an upper region of the body part 20 in a gravitational direction G. The gas phase region means a space region above liquid surface (region not immersed under the liquid surface) in the body part 20. Thus, gas of the easily polymerizable substance can contact the ancillary equipment 30.

The ancillary equipment 30 is not particularly limited but may be, for example, a nozzle, an instrumentation device such as a pressure meter, an air vent, a valve such as a pressure control valve, or a backfire prevention part or may be combination thereof.

The valve is preferably a pressure control valve, and for example, a pressure control valve 31 illustrated in Fig. 1 is not particularly limited as long as the pressure control valve 31 can perform air exhaust and/or air intake in accordance with the internal pressure of the ancillary equipment 30 (and the body part 20 communicating with the ancillary equipment 30). The valve is preferably a pressure control valve that performs air exhaust and air intake in accordance with the internal pressure of the body part 20, and is, for example, a breather valve, an ATMOS valve, a safety valve, a decompression valve, or an automatic valve configured to open and close in accordance with a setting value of a pressure meter.

A backfire prevention part 32 is not particularly limited as long as the backfire prevention part 32 can prevent backfire of the body part 20, but may be constituted by, for example, a frame arrester or a detonation frame arrester.

The air vent is an air purge nozzle (also referred to as a pipe). The air vent may be installed extending from a nozzle 33 or may be installed with a connection such as a flange provided to each of the nozzle 33 and the air vent and the connections connected. The shape of the air vent is not particularly limited. The air vent may include a region curved such that an opening of the air vent faces downward to prevent rain and the like from entering a region for air purge.

The instrumentation device is, for example, a pressure meter. The pressure meter includes, in addition to a pressure meter configured to measure pressure in a system, for example, a pressure level meter configured to measure liquid surface by measuring pressure.

Note that the ancillary equipment 30 may be attached through an interposed member such as the nozzle 33 connected to the ancillary equipment 30 or may be directly attached to the body part 20.

The ancillary equipment 30 may be attached to a wall surface of the body part 20, corresponding to the gas phase region of the body part 20, but the ancillary equipment 30 is preferably installed on the upper side of a top plate installed in the gas phase region.

### <Temperature control mechanism>

The temperature control mechanism 40 is configured to control the temperature of the ancillary equipment 30 to promote condensation of the easily polymerizable substance.

Even when the polymerization inhibitor is supplied to the body part 20, the supplied polymerization inhibitor is mainly present in a liquid phase region of the body part 20 but hardly present in the gas phase region of the body part 20 and the ancillary equipment 30. Thus, when vapor containing the easily polymerizable substance condenses in the ancillary equipment 30, the polymerization inhibitor is hardly present in a condensed region. Accordingly, polymerization is more likely to occur in a gas phase region of the ancillary equipment 30 or the like than in the liquid phase region of the body part 20. However, in the present embodiment, the easily polymerizable substance in the ancillary equipment 30 condenses but is maintained at low temperature by the temperature control mechanism 40, and accordingly, polymerization reaction is inhibited. Thus, polymer generation in the ancillary equipment 30 can be inhibited, and disturbance of the function of the ancillary equipment 30 by polymer grown in the ancillary equipment 30 can be inhibited.

The temperature control mechanism 40 is not particularly limited but may be configured to set, for example, a temperature range in which the temperature of the ancillary equipment 30 is a temperature (upper limit temperature) lower than the boiling point of the easily polymerizable substance to a temperature (lower limit temperature) higher than the melting point of the easily polymerizable substance.

The upper limit temperature of the ancillary equipment 30 is set as appropriate depending on an easily polymerizable substance to be handled. In the present embodiment, the easily polymerizable substance to be handled is a radical polymerizable material. Thus, the upper limit temperature of the ancillary equipment 30 may be set to be 50°C or lower, preferably 45°C or lower, more preferably, 40°C or lower, further more preferably 35°C or lower.

The lower limit temperature of the ancillary equipment 30 is set as appropriate depending on an easily polymerizable substance to be handled and may be set to be preferably 15°C or higher, more preferably 20°C or higher, further more preferably 25°C or higher.

The temperature control mechanism 40 may include, for example, a temperature control unit 41 that can be wound around the ancillary equipment 30. The configuration of the temperature control mechanism 40 is not particularly limited as long as the temperature control mechanism 40 can control the temperature of the ancillary equipment 30 to promote condensation of the easily polymerizable substance, but the temperature control mechanism 40 may be configured to heat the ancillary equipment 30 in accordance with season (in accordance with the ambient temperature) (for example, in winter season), or may be configured to cool the ancillary equipment 30 (for example, in summer season) (even with the same setting temperature, warmth may be kept (heating may be performed) in winter season and cooling may be performed in summer season). The temperature control mechanism 40 is maintained at the temperature of the ancillary equipment 30 when the temperature of the ancillary equipment 30 is already in a temperature range in which condensation of the easily polymerizable substance is promoted. The temperature control mechanism 40 can perform control to a temperature at which condensation occurs while solidification is prevented.

In addition, the temperature control mechanism 40 is preferably equipment that gas of the easily polymerizable substance cannot be contacted and that can be additionally attached to the existing ancillary equipment 30. Thus, the temperature control mechanism 40 is installed at an upper region of the body part 20 and includes no condenser (vent condenser) that gas of the easily polymerizable substance can contact. The vent condenser installed in this manner is not preferable from viewpoints of device scale (attachment to a narrow place is physically difficult in a case of attachment to the existing ancillary equipment 30), maintenance (such as cleaning), and the like.

The temperature control mechanism 40 may be configured by, for example, water-type temperature control. In this case, the temperature control mechanism 40 may be configured by flow (trace pipe) of a heat medium (preferably water) through the temperature control unit 41 constituted by a copper pipe or the like, and the temperature of water flowing through the temperature control unit 41 may be set as appropriate in accordance with season (in accordance with the ambient temperature). Note that arrows in Fig. 1 illustrate water flow.

Note that the material of the temperature control unit 41 is not limited to copper. Moreover, the configuration of the temperature control unit 41 is not limited to a trace pipe but may be a double pipe, water spraying, or the like.

The configuration of the temperature control mechanism 40 is not particularly limited as long as the temperature control mechanism 40 can control the temperature of the ancillary equipment 30. For example, the temperature control mechanism 40 may be configured by electric-heater temperature control or air-cooling temperature control. In a case where the temperature control mechanism 40 is configured by electric-heater temperature control, the temperature control mechanism 40 can heat the ancillary equipment 30 (for example, in winter season in which the ambient temperature is low). The temperature control mechanism 40 may perform control to a temperature at which condensation occurs while solidification is prevented by performing heating in winter season but not in summer season. In this case, the temperature control mechanism 40 is preferably constituted by a ribbon heater or a silicon code heater that can be wound around the ancillary equipment 30, in place of the temperature control unit 41.

The position (installation range) of the temperature control mechanism 40 for the ancillary equipment 30 is not particularly limited as long as the temperature control mechanism 40 can control the temperature of the ancillary equipment 30 to promote condensation of the easily polymerizable substance.

Note that the temperature control mechanism 40 may be configured to control the ancillary equipment 30 to a predetermined temperature not through a temperature sensor nor a temperature controlling unit. Instead of controlling the temperature of the ancillary equipment 30 while directly measuring the temperature of the ancillary equipment 30, the temperature control mechanism 40 may be operated by setting the temperature of the heat medium of the temperature control mechanism 40 so that the temperature of the ancillary equipment 30 becomes a set temperature range.

As described above, the handling device 10 for an easily polymerizable substance according to the present embodiment includes: the ancillary equipment 30 installed at the body part 20 in which an easily polymerizable substance is handled, the ancillary equipment 30 including no temperature control mechanism 40 that gas of the easily polymerizable substance can contact; and the temperature control mechanism 40 configured to control the temperature of the ancillary equipment 30 to a temperature lower than the boiling point of the easily polymerizable substance and to a temperature higher than the melting point of the easily polymerizable substance.

With the handling device 10 according to the present embodiment, the easily polymerizable substance in the ancillary equipment 30 condenses but is maintained at low temperature by the temperature control mechanism 40, and accordingly, polymerization reaction is inhibited. Thus, with the handling device 10 according to the present embodiment, polymer generation in the ancillary equipment 30 can be inhibited.

The temperature lower than the boiling point is 50°C. The easily polymerizable substance with the temperature thus controlled in the ancillary equipment 30 condenses but is maintained at low temperature by the temperature control mechanism 40, and accordingly, polymerization reaction is inhibited. Thus, with the handling device 10 according to the present embodiment, polymer generation in the ancillary equipment 30 can be inhibited.

The temperature control mechanism 40 controls temperature by using a heat medium. Polymerization of the easily polymerizable substance in the ancillary equipment 30 can be effectively inhibited when the temperature control mechanism 40 is configured to heat the ancillary equipment 30 (for example, in winter season) and cool the ancillary equipment 30 (for example, in summer season) in accordance with season (in accordance with the ambient temperature). The temperature control mechanism 40 may perform control to a temperature at which condensation occurs while solidification is prevented by performing heating in winter season but not in summer season.

The temperature control mechanism 40 may control temperature by using an electric heater. With this configuration, the temperature control mechanism 40 can heat the ancillary equipment 30 in winter season in which the ambient temperature is low but not in summer season in which the ambient temperature is high. Thus, the temperature control mechanism 40 can effectively inhibit polymerization of the easily polymerizable substance in the ancillary equipment 30 by maintaining a temperature at which solidification is prevented but condensation occurs.

In the ancillary equipment 30, at least one of the nozzle 33, the instrumentation device (not illustrated), the air vent (not illustrated), and the valve (for example, the pressure control valve 31) is directly connected to the body part 20 or at least one of the instrumentation device (not illustrated), the air vent (not illustrated), and the valve is connected to the body part 20 through the intermediary of the nozzle 33.

The ancillary equipment 30 includes the pressure control valve 31 that performs air exhaust and/or air intake in accordance with the internal pressure in the body part 20.

The handling device 10 handles, in addition to the easily polymerizable substance, the polymerization inhibitor for inhibiting polymerization of the easily polymerizable substance. Thus, polymer generation in the handling device 10 can be inhibited.

The easily polymerizable substance may be (meth)acrylic acid or (meth)acrylic acid ester. With this configuration, polymer generation in the ancillary equipment 30 can be inhibited when (meth)acrylic acid or (meth)acrylic acid ester, which are easily polymerized, is manufactured or refined.

The body part 20 is at least one equipment for storage, separation, heat exchange, and reaction of the easily polymerizable substance. With this configuration, the handling device 10 can handle, in addition to the easily polymerizable substance, the polymerization inhibitor for inhibiting polymerization of the easily polymerizable substance.

Note that the present embodiment is not limited to the above-described embodiment but may include various kinds of modifications within the scope of the claims.

The present application is based on Japanese Patent Application No. 2022-17646, filed on February 8, 2022, the disclosure content of which is hereby incorporated by reference herein in its entirety.

### Reference Signs List

10: handling device
20: body part
30: ancillary equipment
40: temperature control mechanism
G: gravitational direction

## Claims

1. A handling device for an easily polymerizable substance, comprising:
ancillary equipment installed at a body part in which an easily polymerizable substance is handled, the ancillary equipment is not equipped with a temperature control mechanism that gas of the easily polymerizable substance can contact; and
a temperature control mechanism configured to control the temperature of the ancillary equipment to a temperature lower than the boiling point of the easily polymerizable substance and to a temperature higher than the melting point of the easily polymerizable substance.

2. The handling device for an easily polymerizable substance according to claim 1, wherein the temperature lower than the boiling point is 50°C.

3. The handling device for an easily polymerizable substance according to claim 1 or 2, wherein the temperature control mechanism controls temperature by using a heat medium.

4. The handling device for an easily polymerizable substance according to claim 1 or 2, wherein the temperature control mechanism controls temperature by using an electric heater.

5. The handling device for an easily polymerizable substance according to any one of claims 1 to 4, wherein in the ancillary equipment, at least one of a nozzle, an instrumentation device, an air vent, and a valve is directly connected to the body part or at least one of the instrumentation device, the air vent, and the valve is connected to the body part through the intermediary of the nozzle.

6. The handling device for an easily polymerizable substance according to any one of claims 1 to 5, wherein the ancillary equipment includes a pressure control valve that performs air exhaust and/or air intake in accordance with internal pressure in the body part.

7. The handling device for an easily polymerizable substance according to any one of claims 1 to 6, wherein the handling device handles, in addition to the easily polymerizable substance, a polymerization inhibitor for inhibiting polymerization of the easily polymerizable substance.

8. The handling device for an easily polymerizable substance according to any one of claims 1 to 7, wherein the easily polymerizable substance is (meth)acrylic acid or (meth)acrylic acid ester.

9. The handling device for an easily polymerizable substance according to any one of claims 1 to 8, wherein the body part is at least one equipment for storage, separation, heat exchange, and reaction of the easily polymerizable substance.
